Europäisches Patentamt

European Patent Office

Office européen des brevets

(19)

(11) Publication number: **0 211 616 B1**

# (12) EUROPEAN PATENT SPECIFICATION

(45) Date of publication of patent specification: **20.03.91**   (51) Int. Cl.⁵: **B04B 1/02**

(21) Application number: **86305867.3**

(22) Date of filing: **30.07.86**

(54) Centrifugal separator for separating sludge in waste water.

(30) Priority: **02.08.85 JP 119710/85**
    **18.04.86 JP 59250/86**

(43) Date of publication of application:
    **25.02.87 Bulletin 87/09**

(45) Publication of the grant of the patent:
    **20.03.91 Bulletin 91/12**

(84) Designated Contracting States:
    **DE FR GB NL SE**

(56) References cited:
    **DE-A- 1 923 605**
    **FR-A- 767 977**
    **FR-A- 2 410 509**
    **US-A- 3 675 846**

(73) Proprietor: **SASAKURA ENGINEERING CO. LTD.**
**6-7-5 Mitejima Nishiyodogawa-ku**
**Osaka 555(JP)**

(72) Inventor: **Deguchi, Nobuyuki**
**3-2-69 Suimeidai**
**Kawanishi 666-01(JP)**
Inventor: **Shintani, Norio**
**7-6-16 Suzurandai-minamimachi Kita-ku**
**Kobe 651-11(JP)**
Inventor: **Morita, Mikio**
**1-1-1-201 Obanoyama-cho Nada-ku**
**Kobe 657(JP)**
Inventor: **Ohno, Shiro**
**3-12-12 Tsukushigaoka Kita-ku**
**Kobe 651-12(JP)**

(74) Representative: **Hayward, Denis Edward Peter et al**
**Lloyd Wise, Tregear & Co. Norman House**
**105-109 Strand**
**London WC2R 0AE(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a centrifugal separator for separating suspended substances (sludge) in waste water, prior to the measurement of the oil density in the waste water which is to be discharged outboard from a ship.

Usually, before discharging waste water outboard from a ship, a small sample of the waste water is taken in order to measure the oil density contained in the waste water. If the oil density of the waste water is at or below the legally specified level, the waste water discharge valve is opened and the waste water is discharged outboard. To measure the oil density in the sample waste water, use is made of an optical oil densitometer, which is based on the principle that the light transmission rate and light scattering rate vary with the oil density when light is passed through the sample waste water. However, if there are suspended substances such as rust in the waste water, the measured values of the oil density may be in error, and therefore the sample waste water should be cleared of such suspended substances prior to the measurement of the oil density using the optical oil densitometer.

There exists a certain time lag between the collection of a sample of the waste water and the opening/closing of the outboard discharge valve, for the waste water to flow to and reach the discharge valve from the sampling part; consequently due to this time lag, waste water having a high oil density may be discharged outboard. For this reason, the time span between the collection of the sample waste water and the measurement of the oil density should be made as short as possible; thus, for removing suspended substances in the sample waste water, the time required should be made even shorter.

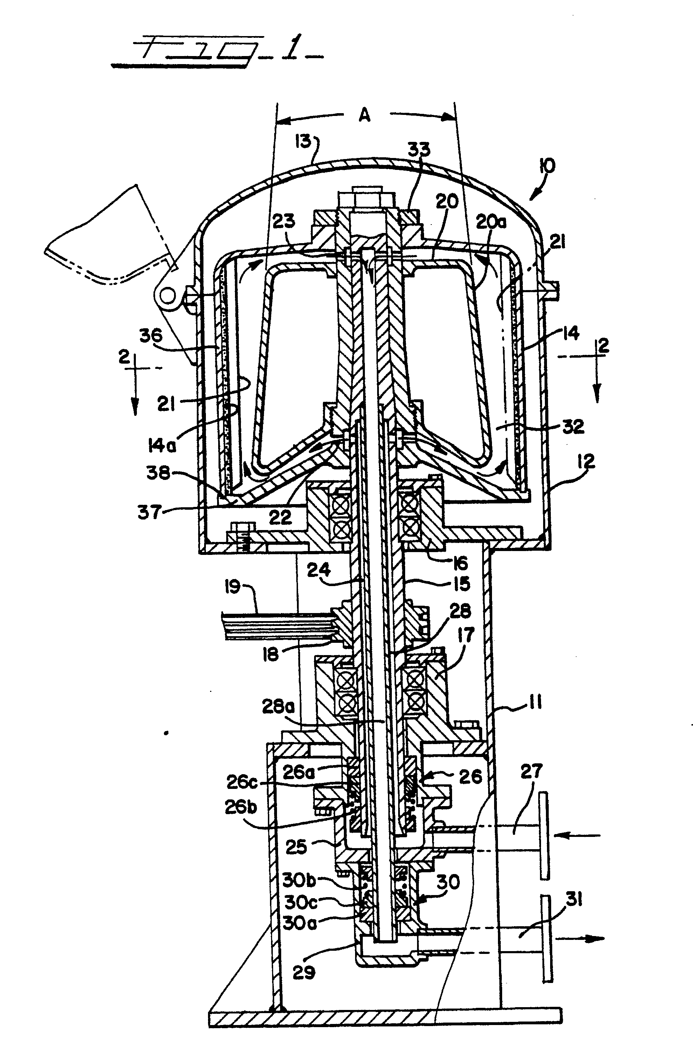

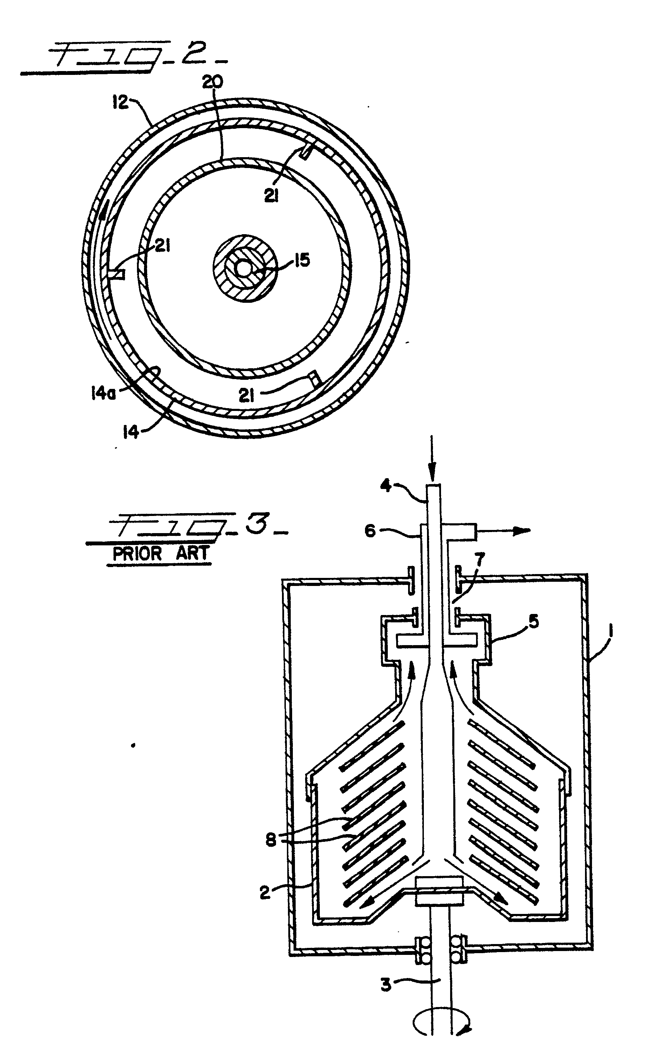

For this purpose, conventionally a centrifugal separator, such as that shown in Fig. 3, has been used for separating and removing suspended substances, as a pre-treatment prior to the measurement of the oil density.

The conventional separator includes a cylindrical bucket 2 mounted inside a cover casing 1; this bucket is rotated at high speed by means of a drive shaft 3. A waste water inlet pipe 4 extending straight down from the upper part of the cover casing 1 reaches almost to the bottom of the bucket 2. In the upper part of the bucket 2 is formed an annular-grooved separated waste water chamber 5, and the waste water inlet pipe 4 passes through the inside of the separated waste water chamber 5. A waste water outlet pipe 6 is connected to the chamber 5, and surrounds the inlet pipe 4. The suspended substances in the waste water supplied to bucket 2 by the waste water inlet pipe 4 are separated by being pressed against the inner surface of the wall of the bucket 2, by reason of the centrifugal force generated due to the rotation of the bucket 2. The waste water from which the suspended substances have been separated out, flows into the separated waste water chamber 5, where it is pressed to the inner surface by means of centrifugal force so as to be discharged outside through the waste water outlet pipe 6.

In the conventional centrifugal separator as described above, a gap 7 for preventing the waste water outlet pipe 6 from coming into contact with the rotating separated waste water chamber 5, is provided between the separated waste water chamber 5 and the waste water outlet pipe 6. Therefore, if cleaning water is supplied through the waste water inlet pipe 4 to clean the inside of the bucket 2, after the rotation of the bucket 2 has halted, this cleaning water flows out only through the gap 7 between the separated waste water chamber 5 and the waste water outlet pipe 6, and it never flows out of the waste water outlet pipe 6. (It flows out through the waste water outlet pipe 6 only when the bucket 2 is rotating.)

Accordingly, the suspended substances separated and deposited on the inner surface of the bucket 2 cannot be discharged or removed by pouring in cleaning water. The suspended substances separated and deposited on the inner surface of the bucket 2 can be discharged or removed only by disassembling the entire unit. This makes the job of discharging and removing suspended substances extremely complex and troublesome. Moreover, during the separation process, flammable gas in the waste water gushes out of the gap 7 between the separated waste water chamber 5 and the waste water outlet pipe 6, and it remains in the space between the cover casing 1 and the bucket 2, posing the danger of an explosion due to sparks, etc. generated by contact of the bucket with the cover casing 1 during operation. Therefore, when mounting this centrifugal separator for pre-treatment purposes on a ship, an inert gas such as nitrogen must be filled and enveloped in the cover oasing 1 so as to make the mechanism explosion-proof. This requires a large financial investment.

Furthermore, the separated waste water from the waste water outlet pipe 6 in the conventional centrifugal separator is discharged under almost no pressure, thus requiring a transfer pump for moving this separated waste water to the oil densitometer. This, of course, is another problem.

Moreover, during separation of suspended substances inside the bucket, the oil in the waste water adheres to the surfaces of the succession of umbrella-like baffles 8 which are mounted inside the bucket, thereby delaying the discharge from inside the bucket and resulting in prolongation of the time needed for separation and removal of suspended substances.

Many centrifugal separators exist in the prior art for other purposes and they have a variety of constructions. For instance, in FR-A-2410509 there is disclosed a centrifugal separator comprising a base frame, a partly hollow drive shaft journalled on said base frame and adapted to be rotatably driven, a hollow cylindrical rotor fixed on said shaft to be driven thereby and coaxially surrounding said shaft which shaft provides a core member within the rotor thereby to form an annular treatment chamber within the peripheral wall of said rotor and around the shaft this chamber having inlet and outlet ports, a pipe fixed coaxially inside the hollow part of said drive shaft providing a first axial flow passage inside the pipe and a second annular axial flow passage inside the drive shaft and outside the pipe, each of said flow passages communicating with respective ones of said inlet and outlet ports, and first and second headers mounted on said frame in axial alignment with said drive shaft with provision for the connection of external pipes to the headers, one end of the drive shaft extending externally of the rotor as far as the first header where said second axial flow passage within the shaft communicates with the interior of said first header. But in fact this is an arrangement of centrifuge specifically designed for contacting two liquid phases and then re-separating them, to which end it is arranged with the drive shaft horizontal so that the rotor rotates in a vertical plane, the first and second headers are located at opposite ends of the drive shaft on opposite sides of the rotor, and both of the headers are connected to outlet pipes one header receiving the first liquid phase separating and exiting at the outer periphery of the rotor while the other receives the second liquid phase separating and exiting at the inner periphery of the rotor.

The present invention, on the other hand, is designed to solve the foregoing problems encountered with the conventional centrifugal separator when used for removing suspended solid matter from a sample liquid mixture.

According to the present invention, there is provided a centrifugal separator for treating a sample liquid mixture of water, oil and suspended solid matter (sludge) to remove the solid matter before the mixture of oil and water is sent to an oil density meter for monitoring its oil content, comprising a base frame, a tubular drive shaft journalled on said frame and adapted to be rotably driven, a hollow rotor mounted coaxially around an end portion of said drive shaft and fixed thereto to be driven thereby, said rotor having a cylindrical peripheral wall and defining an enclosure between said peripheral wall and said shaft, a core member disposed coaxially around and fixed to rotate with said drive shaft within said rotor enclosure, said core member having a peripheral wall between which and the peripheral wall of the rotor there is defined an annular treatment chamber which chamber has inlet and outlet ports, a pipe fixed coaxially inside the tubular drive shaft and providing a first axial flow passage inside the pipe and a second annular axial flow passage inside the drive shaft and outside the pipe each of said passages communicating with a respective one of the inlet and outlet ports, and first and second headers mounted on said frame coaxially with the drive shaft and each having a respective flow inlet or outlet branch connected thereto, with an end of the drive shaft external to the rotor extending as far as and being rotable relatively to said first header whereby said second flow passage communicates with the interior of said first header, characterised in that the second header is axially adjacent to said first header and the corresponding end of the pipe within the drive shaft extends beyond the end of the shaft into said second header and is rotatable relatively thereto, whereby said first flow passage communicates with the interior of said second header, the drive shaft is substantially vertical so that the rotor rotates in a substantially horizontal plane, the liquid mixture being treated flows upwardly through the treatment chamber, and the peripheral wall of the core member is frusto-conical with a diameter that increases downwardly, such that only the suspended solid matter is retained at the peripheral wall of the rotor, the water/oil mixture flowing out at the top of the treatment chamber.

This invention will be better understood from the following detailed description of one embodiment, given by way of example and with reference to the accompanying drawings, wherein:

Fig. 1 is a front vertical section of a centrifugal separator in accordance with this invention;

Fig. 2 is a sectional view taken on the line 2-2 of Fig.1; and

Fig. 3 is a diagrammatic view of a conventional centrifugal separator.

In Figs. 1 and 2, a centrifugal separator 10 includes a base frame 11 and a casing 12 fixed to the top of the frame 11. The case 12 has a top lid 13 hinged to it to be manually opened and closed, the open position of the lid 13 being shown in dash-dot-dot lines in Fig. 1. The lid 13 can be locked when in the closed position shown in solid lines.

The casing 12 houses a hollow cylindrical rotor or bucket 14 fixed coaxially and removably to the upper end of a vertical tubular drive shaft 15 which is journalled by two bearings 16 and 17 on the frame 11. The rotor 14 is rotated at a specific rate by an electric or hydraulic motor (not shown) through belts 19 connected to a pulley 18 fastened on the shaft 15.

The rotor 14 houses a frusto-conical or tapered core member 20 fixed coaxially within it, forming an annular or circumferential separation chamber 32 between the outer conical surface 20a of the member 20 and the inner cylindrical surface 14a of the rotor 14. The chamber 32 has inlet ports 22 formed at the lower center of the rotor 14, and outlet ports 23 at the upper center. The diameter of the conical surface 20a increases in the downward direction. The rotor 14 has a plurality of vertical ribs 21 fixed to the inner surface 14a.

The hollow drive shaft 15 surrounds a pipe 28 which is fixed to it, forming an inner passage 28a inside the pipe 28, and an outer annular passage 24 around the pipe 28 and inside the shaft 15. The annular passage 24 communicates with the inlet ports 22, and the inner passage 28a communicates with the outlet ports 23.

The lower end of the shaft 15 extends rotatably into an upper header 25 formed in the frame 11, so that the bottom of the annular passage 24 opens in the header 25. The lower end of the shaft is sealed to the header with a rotary mechanical seal 26, which includes a seat ring 26a and a seal ring 26c urged against the seat ring 26a by a spring 26b. The header 25 has an inlet 27.

The lower end of the pipe 28 extends rotatably through the lower side of the header 25 and into a lower header 29, which is mounted on the lower surface of the upper header 25, so that the inner passage 28a of the pipe 28 opens in the lower header 29. The lower end of the pipe is sealed to the lower header with a rotary mechanical seal 30, which includes a seat ring 30a and a seal ring 30c urged against the seat ring 30a by a spring 30b. The lower header 29 is connected to an outlet 31.

In operation, while the drive shaft 15 and the rotor 14 are rotating, waste water is supplied under pressure through the inlet 27, the upper header 25, the annular passage 24 and the ports 22 to the lower portion of the separation chamber 32 formed between the rotor 14 and the member 20. While flowing upwards (due to the inlet pressure) toward the outlet ports 23 inside the chamber 32, the water is subjected to the centrifugal force due to the rotation of the rotor 14 and the ribs 21, and the suspended substances in the waste water are precipitated and separated by being pressed onto the inner surface 14a. The water after separation passes through the outlet ports 23, inner passage 28a, lower header 29 and outlet 31, and is sent to a conventional oil densitometer (not shown).

Thus, the lower ends of the shaft 15 and the pipe 28, which rotate with the rotor 14, are rotatable in the fixed headers 25 and 29, respectively, and hermetically sealed, making the entire route from the inlet 27 to the outlet 31 a hermetically sealed structure. This prevents any inflammable gas contained in the waste water from leaking out of the system.

The water forced into the inlet 27 flows to the outlet 31 by its own pressure. The pressure of the water discharged from the outlet 31 is the pressure of the water fed to the inlet 27 less the pressure loss in moving through the separator. By setting the pressure of the water fed to the inlet 27 at a sufficient level (with the above pressure loss taken into account), the water being discharged from the outlet 31 can be maintained at a considerable pressure level. This eliminates the necessity of using a pump to move the water from the outlet 31 to the oil densitometer.

The water forced into the inlet 27 flows out of the outlet 31 even when rotation of the rotor 14 is halted. Therefore, if, after a separation process, cleaning water is forced into the inlet 27 even while the rotor 14 is not rotating, the cleaning water will flow through the rotor 14 and out of the outlet 31. This enables the suspended substances precipitated and separated on the inner rotor surface 14a to be washed away and removed.

Instead, the cleaning water may be forced into the outlet 31 and discharged from the inlet 27.

Only in case the above procedure proves insufficient to remove the suspended substances inside the rotor 14, the lid 13 of the casing 12 may be swung open on the hinge as shown by the dash-dot-dot lines in Fig. 1, and the nut 33 fastening the rotor 14 to the drive shaft may be removed to disassemble the rotor 14 and manually remove the suspended substances from the inside. The rotor 14 is formed by an upper inverted cup-shaped part 36 and a lower disk-shaped part 37, and the lower edge of the cup 36 fits into a groove 38 of the disk 37. Therefore after the nut 33 has been removed from the separator, the cup 36 may be lifted off the disk 37 to gain access to the interior of the cup.

In the separation and removal of suspended substances from the water inside the chamber 32, since the substances are heavier than water, they are separated by being pressed onto the inner rotor surface 14a by the centrifugal force, but the oil in the waste water, being lighter than water, is gathered on the outer conical surface 20a of the member 20.

If this surface 20a were not conical but cylindrical, when the oil gathered on the surface 20a moves up along the surface due to the difference in the specific gravities of oil and water and the water flow, the rate of adhesion to the surface 20a would increase, and the oil adhered to the surface 20a would move upward and be peeled off from the surface 20a after growing into large oil drops, thus delaying the flow of the oil from the chamber 32. In other words, the amount of time needed for the separation and removal of suspended substances would be prolonged by this action.

In this invention, however, the surface 20a is conical with a diameter that increases in the downward direction, as mentioned above. This reduces the amount of oil which adheres to the surface 20a when the oil gathered on it moves upward. Thus, the oil content introduced to the lower portion of the surface 20a promptly reaches the upper portion, successfully preventing the delay in the flow of oil content out of the chamber 32.

The angle A (Fig. 1) of taper of the surface 20a should be large from the standpoint of shortening the time required for the discharge of the oil content. However, the interior volume of the chamber 32 increases with an increase of the angle A, thus raising the volume of water pooled inside the chamber 32. Therefore, this angle should be within limits. From experiments, the preferred angle range has been found to be between 2 and 40 degrees, with the most advantageous angle being 10 degrees.

## Claims

1. A centrifugal separator for treating a sample liquid mixture of water, oil and suspended solid matter (sludge) to remove the solid matter before the mixture of oil and water is sent to an oil density meter for monitoring its oil content, comprising a base frame (11), a tubular drive shaft (15) journalled on said frame and adapted to be rotably driven, a hollow rotor (14) mounted coaxially around an end portion of said drive shaft and fixed thereto to be driven thereby, said rotor having a cylindrical peripheral wall (14a) and defining an enclosure between said peripheral wall and said shaft, a core member (20) disposed coaxially around and fixed to rotate with said drive shaft within said rotor enclosure, said core member having a peripheral wall (20a) between which and the peripheral wall (14a) of the rotor there is defined an annular treatment chamber (32) which chamber has inlet and outlet ports (22, 23), a pipe (28) fixed coaxially inside the tubular drive shaft and providing a first axial flow passage (28a) inside the pipe and a second annular axial flow passage (24) inside the drive shaft and outside the pipe each of said passages communicating with a respective one of the inlet and outlet ports, and first and second headers (25, 29) mounted on said frame coaxially with the drive shaft and each having a respective flow inlet or outlet branch (27, 31) connected thereto, with an end of the drive shaft external to the rotor extending as far as and being rotable relatively to said first header whereby said second flow passage communicates with the interior of said first header, characterised in that the second header is axially adjacent to said first header and the corresponding end of the pipe within the drive shaft extends beyond the end of the shaft into said second header and is rotatable relatively thereto, whereby said first flow passage communicates with the interior of said second header, the drive shaft is substantially vertical so that the rotor rotates in a substantially horizontal plane, the liquid mixture being treated flows upwardly through the treatment chamber, and the peripheral wall of the core member is frusto-conical with a diameter that increases downwardly, such that only the suspended solid matter is retained at the peripheral wall of the rotor, the water/oil mixture flowing out at the top of the treatment chamber.

2. A separator according to Claim 1, wherein the inner face of the outer cylindrical wall of the rotor is provided with vertical ribs (21).

3. A separator according to Claim 1 or Claim 2, and further comprising a mechanical seal (26) provided around the drive shaft where it enters the first header, and another mechanical seal (30) provided around the inner pipe where it enters the second header.

4. A separator according to any preceding Claim, wherein the angle of taper of the frusto-conical wall of the core member is within the range of 2° to 40°.

5. A separator according to Claim 4, wherein said angle of taper is approximately 10°.

## Revendications

1. Un séparateur pour traiter un échantillon d'un mélange liquide d'eau, d'huile et de matières solides en suspension (boue) pour éliminer les matières solides avant que le mélange d'huile et d'eau soit envoyé à un appareil de mesure de la densité d'huile pour afficher sa teneur en huile, comprenant un châssis de base (11), un arbre d'entraînement tubulaire (15), monté à rotation sur ledit châssis et adapté pour être entraîné en rotation, un rotor creux (14), monté coaxialement autour d'une partie d'extrémité dudit arbre d'entraînement et fixé dessus de façon à être entraîné par lui, ledit rotor présentant une paroi périphérique cylindrique (14a) et définissant une enceinte entre ladite paroi périphérique et ledit arbre, un organe de noyau (20) disposé axialement autour dudit arbre d'entraînement et fixé sur celui-ci afin de tourner avec lui à l'intérieur de ladite enceinte, ledit organe de noyau présentant une paroi périphérique (20a) entre laquelle et la paroi périphérique (14a) du rotor est définie une chambre de traitement annulaire (32) qui présente des orifices d'entrée et sortie (22,23), un tube (28) fixé coaxialement à l'intérieur de l'arbre d'entraînement tubulaire et produisant un premier passage d'écoulement axial (28a) à l'intérieur du tube et un second passage d'écoulement axial annulaire (24) à l'intérieur de l'arbre d'entraînement et, extérieurement au tube, chacun desdits passages communiquant respectivement avec un orifice d'entrée et de sortie, et des premier et second collecteurs (25,29) montés sur ledit châssis, coaxialement avec l'arbre d'entraînement et présentant chacun un embranchement d'entrée ou de sortie d'écoulement (27,31) respectif, leur étant relié, avec une extrémité de l'arbre d'entraînement extérieure au rotor s'étendant sur une longueur permettant de tourner par rapport audit premier collecteur, de façon que ledit second passage d'écoulement communique avec l'intérieur dudit premier collecteur, caractérisé en ce que le second collecteur est axialement adjacent audit premier collecteur et que l'extrémité correspondante du tube situé à l'intérieur de l'arbre d'entraînement s'étend au delà de l'arbre, à l'intérieur dudit second collecteur, et est susceptible de tourner par rapport à celui-ci, de façon que ledit premier passage d'écoulement communique avec l'intérieur dudit second collecteur, l'arbre d'entraînement étant sensiblement vertical de sorte que le rotor tourne dans un plan sensiblement horizontal, le mélange liquide traité s'écoulant vers le haut, par la chambre de traitement, et la paroi périphérique de l'organe formant noyau étant tronconique avec un diamètre augmentant en allant vers le bas, de sorte que seules les matières solides en suspension soient retenues sur la paroi périphériques du rotor, le mélange eau/huile s'écoulant à l'extérieur par le toit de la chambre de traitement.

2. Un séparateur selon la revendication 1, dans lequel la face intérieure de la paroi cylindrique extérieure du rotor est pourvue de nervures verticales (21).

3. Un séparateur selon la revendication 1 ou 2, et comprenant en outre un joint d'étanchéité mécanique (26) prévu autour de l'entrée de l'arbre d'entraînement dans le premier collecteur, et un autre joint d'étanchéité mécanique (30) prévu à l'entrée du tube intérieur dans le second collecteur.

4. Un séparateur selon l'une quelconque des revendications précédentes, dans lequel l'angle de conicité de la paroi tronconique de l'organe de noyau est situé dans la plage de 2° à 40°.

5. Un séparateur selon la revendication 4, dans lequel ledit angle de conicité est d'à peu près 10°.


**Ansprüche**

1. Zentrifugalseparator zum Behandeln eines Probeflüssigkeitsgemischs aus Wasser, Öl und suspendierten Feststoffen (Schlamm), um daraus Feststoffe zu entfernen, bevor das Gemisch aus Öl und Wasser einem Öldichtemesser zugeführt wird, um dessen Ölgehalt zu überwachen, bestehend aus einem Basisgestell (11), einer röhrenförmigen Antriebswelle (15), die am Rahmen in einem Achslager geführt und drehbar antreibbar ist, einem hohlen, koaxial um einen Endabschnitt der Antriebswelle eingesetzten und zum Antrieb desselben daran befestigten Rotor (14), der eine zylinderförmige Umfangswand (14a) aufweist und eine Einfassung zwischen der Umfangswand und der Welle bestimmt, einem koaxial um die sowie zum Drehen an der Antriebswelle innerhalb der Rotoreinfassung angeordneten Kernteil (20), das eine Umfangswand (20a) aufweist, zwischen der und der Umfangswand (14a) des Rotors eine ringförmige Behandlungskammer (32) begrenzt liegt, die eine Einlaß- und eine Auslaßöffnung (22, 23), ein Rohr (28), das koaxial innerhalb des röhrenförmigen Antriebswelle befestigt ist und einen ersten axialen Strömungsdurchgang (28a) innerhalb des Rohres und einen zweiten axialen Strömungsdurchgang (24) innerhalb der Welle und außerhalb des Rohres vorsieht, die beide mit ihrer jeweiligen Einlaß- bzw. Auslaßöffnung in Verbindung stehen, und mit einem ersten und zweiten Verteilerkopf (25, 29), die auf dem Rahmen koaxial mit der Antriebswelle eingesetzt sind und jeweils einen an diesen angeschlossenen Strömungseinlaß- bzw. -auslaßzweig (27, 31 aufweisen, wobei ein Ende der Antriebswelle außerhalb des Rotors sich bis hin zum ersten Verteilerkopf erstreckt, zu dem es drehbar ist, so daß der zweite Strömungsdurchgang mit dem Innern des ersten Verteilerkopfes in Verbindung steht, dadurch **gekenn zeichnet,** daß der zweite Verteilerkopf axial neben dem ersten Verteilerkopf liegt und das entsprechende Ende des Rohrs innerhalb der Antriebswelle sich über das Ende der Welle hinaus in den zweiten Verteilerkopf erstreckt und diesem gegenüber drehbar ist, wobei der erste Strömungsdurchgang mit dem Innern des zweiten Verteilerkopfes in Verbindung steht, die Antriebswelle allgemein vertikal verläuft, so daß der Rotor in einer allgemein horizontalen Ebene rotiert, das behandelte Flüssigkeitsgemisch nach oben durch die Behandlungskammer strömt, und die Umfangswand des Kernteils kegelstumpfartig mit einem Durchmesser ausgebildet ist, der nach unten hin zunimmt, so daß nur die suspendierten Feststoffe an der Umfangswand des Rotors zurückgehalten werden und das Wasser-Öl-Gemisch am oberen Teil der Behandlungskammer herausströmt.

2. Zentrifugalseparator nach Anspruch 1, dadurch **gekennzeichnet,** daß die Innenfläche der äußeren Zylinderwand des Rotors mit einer senkrechten Rippe (21) versehen ist.

3. Zentrifugalseparator nach einem der vorhergehenden Ansprüche 1 oder 2, **gekennzeichnet** durch eine mechanische Dichtung (16), die um die Antriebswelle angeordnet liegt, wo sie in den ersten Verteilerkopf eintritt, und eine weitere um das Innenrohr liegende mechanische Dichtung (30), wo sie in den zweiten Verteilerkopf eintritt.

4. Zentrifugalseparator nach einem der vorhergehenden Ansprüche 1 bis 3, dadurch **gekennzeichnet,** daß der konisch zulaufende Winkel der kegelstumpfartigen Wand des Kernteils im Bereich von 2° bis 40° liegt.

5. Zentrifugalseparator nach Anspruch 4, dadurch **gezeichnet,** daß der konisch zulaufende Winkel bei annähernd 10° liegt.

_Fig_ 1_

FIG_2_

FIG_3_
PRIOR ART